# EUROPÄISCHE PATENTSCHRIFT

(11) **EP 1 748 282 B1**
(45) Veröffentlichungstag und Bekanntmachung des Hinweises auf die Patenterteilung: **02.09.2015**
(21) Anmeldenummer: 06013892.2
(22) Anmeldetag: 05.07.2006
(51) Int. Cl.: G01D 5/00

(54) **Einrichtung zur elektronischen Messstellenidentifikation**
Device for electronic measuring point identification
Dispositif destiné à l'identification d'emplacements de mesure électronique

(30) Priorität: 19.07.2005 DE 102005033549
(43) Veröffentlichungstag der Anmeldung: 31.01.2007
(73) Patentinhaber: Elster Messtechnik GmbH, 68623 Lampertheim (DE)
(72) Erfinder: Arzberger, Michael, Dipl.-Ing. Dr., 68259 Mannheim (DE)
(74) Vertreter: Miller, Toivo

(56) Entgegenhaltungen:
- EP-A- 1 384 975
- GB-A- 2 403 323
- PATENT ABSTRACTS OF JAPAN Bd. 2000, Nr. 24, 11. Mai 2001 (2001-05-11) & JP 2001 184585 A (RICOH ELEMEX CORP), 6. Juli 2001 (2001-07-06)
- PATENT ABSTRACTS OF JAPAN Bd. 2003, Nr. 12, 5. Dezember 2003 (2003-12-05) & JP 2003 323686 A (ELITE:KK), 14. November 2003 (2003-11-14)

## Beschreibung

Die Erfindung betrifft eine Einrichtung zur elektronischen Identifikation der Messstellen von Verbrauchszählern, insbesondere zur Erfassung von Energie- oder Fluidmengen mittels Wasser-, Gas-, Wärme- oder Elektrizitätszählern. Außerdem bezieht sich die Erfindung auf ein Verfahren zum Betreiben einer solchen Einrichtung.

Die Druckschrift EP 1384975 A1 beschreibt eine Zähleranordnung zur Verbrauchsmessung mit einem Zählergehäuse, in dessen Innenraum eine Messeinrichtung sowie Mittel zur Speicherung von Verbrauchswerten untergebracht sind, mit einem Daten- und Informationsträger, der als RFID- Label ausgeführt ist. Die Druckschrift JP 2001184585 A beschreibt RFID-System für einen Gaszähler, wobei das RFID- System zwischen dem Gaszähler und einem Handy- Terminal angeordnet ist. Messwerte und Zählerinformationen werden über das RFID-System zu einem Handy-Terminal übertragen.

Für die Weiterverarbeitung der erfassten Verbrauchsdaten, wie beispielsweise der verbrauchten elektrischen Energie, der verbrauchten Wärmeenergie und des verbrauchten Wasser- oder Gasvolumens, ist eine eindeutige Zuordnung der mit einen geeigneten Verbrauchszähler gewonnenen Messwerte zu einer Messstelle notwendig. Dazu weisen die Verbrauchszähler eine eindeutige Zähleridentifikation, im folgenden Zählerkennzeichnung genannt, auf. Die Zähleridentifikation ist bei elektronischen Verbrauchszählern elektronisch auslesbar. Bei mechanischen Verbrauchszählern ist die Zähleridentifikation mittels eines auf dem Zähler befindlichen Typenschildes ablesbar.

Eine richtige Zuordnung der Messstelle zum entsprechenden Verbrauchszähler wird mittels Zuordnungslisten ausgeführt, wobei die Zuordnungslisten vorzugsweise als Datenbank ausgeführt sind.

Die Struktur der Zuordnungslisten umfasst üblicherweise den Kundennamen, dem eine Kundennummer und eine entsprechende Zähleridentifikation zugeordnet sind.

Um die Daten der Zuordnungslisten stets auf einem aktuellen Stand zu halten, ist ein erheblicher Aufwand zur Pflege der Zuordnungsliste notwendig, da zwar die Zählerkennzeichnung in der Datenbank elektronisch gespeichert ist, jedoch die Identifikation der eigentlichen Messstelle manuell in die Datenbank eingepflegt werden muss.

Ein weiterer Nachteil der gegenwärtig verwendeten Identifikation von Messstellen von Verbrauchszählern zur Verbrauchsbestimmung beruht auf einer durch die manuelle Eingabe und Zuordnung der Messstelle bedingten Fehlerquelle, wobei insbesondere Fehler, die durch eine falsche Zuordnung der Messstelle zu den Kundendaten entstehen, alle erfassten Verbrauchsdaten für eine weitere Verarbeitung und Auswertung unbrauchbar machen, da die Verbrauchsdaten letztlich nicht mehr einem Kunden zuordenbar sind.

Bedingt durch einen notwendigen, regelmäßigen Austausch der Verbrauchszähler, der insbesondere durch den Ablauf der Eichgültigkeit der Zähler durchgeführt werden muss, ist der genannte Aufwand der manuellen Eingabe der Messstellenidentifikation und damit vorhandene Fehlerquelle nicht einmalig sondern wiederkehrend.

Elektronische Verbrauchszähler sind üblicherweise mit einer elektronisch auslesbaren Zähleridentifikation, im folgenden auch Zählerkennzeichnung genannt, versehen, wobei die Verbrauchsdatenerfassung mittels einer Fernauslesung ausführbar ist. Dabei ist eine einfache Identifizierung der Messstelle nicht mehr möglich, da beim Auslesevorgang keine direkte räumliche Nähe zur Messstelle vorhanden ist.

Eine mittels der Fernauslesung durchgeführte Verbrauchsdatenerfassung kann den Ursprung der gesendeten Verbrauchsdaten nur durch elektronisch verfügbare Identifikationen, wie der Identifikation des Zählers oder des Fernauslesemoduls, näher spezifizieren. Eine für die Verbrauchsdatenerfassung eigentlich benötigte Identifikation der Messstelle ist nicht durchführbar.

Mechanische Verbrauchszähler, zu den insbesondere Wasserzähler zählen, werden üblicherweise über eine Verbrauchsimpulsschnittstelle betrieben. Für solche Verbrauchszähler muss sowohl die Zuordnung der Verbrauchsdaten zum Zähler selbst als auch die Zuordnung zur Messstelle mittels einer Liste nachgebildet werden, da nur das Fernauslesemodul elektronisch identifizierbar ist.

Ausgehend von den beschriebenen Nachteilen liegt der Erfindung die Aufgabe zugrunde, die vorgenannten Nachteile, insbesondere bedingt durch eine fehlende eindeutige elektronisch auswertbare Kennzeichnung und Zuordnung der Messstelle zu den erfassten Verbrauchsdaten eines Verbrauchszählers, zu vermeiden und eine verbesserte und fehlerreduzierte Auswertung der von einer Messstelle erfassten Verbrauchsdaten des Zählers zu gewährleisten.

Diese Aufgabe wird erfindungsgemäß mit den in Anspruch 1 angegebenen Merkmalen gelöst. Vorteilhafte Ausgestaltungen, Verbesserungen der erfindungsgemäßen Einrichtung sowie ein Verfahren zum Betreiben einer solchen Einrichtung sind in weiteren Ansprüchen und in der Beschreibung angegeben.

Die erfindungsgemäße Einrichtung zur elektronischen Identifikation der Messstellen von Verbrauchszählern, insbesondere von Wasser-, Gas-, Wärme- oder Elektrizitätszähler, umfasst wenigstens einen Verbrauchszähler zur Erfassung der von wenigstens einer Messstelle erfassten Energie- oder Fluidmengen, im folgenden auch Verbrauchsdaten genannt, wobei der Verbrauchszähler oder eine mit dem Verbrauchszähler verbindbare Abfrageeinheit, welche vorzugsweise als Fernauslesemodul ausgeführt ist, die erfassten Verbrauchsdaten und eine Zählerkennzeichnung zur Identifikation des Zählers einer Erfassungs- und Auswerteeinheit übermitteln. Die Erfassung der Verbrauchsdaten umfasst dabei die Anzeige und/oder Speicherung der von der Messstelle erfassten Energie- oder Fluidmengen.

Die Erfassungs- und Auswerteeinheit ist in einer bevorzugten Ausführungsform als Datenverarbeitungseinheit ausgeführt, wobei die übermittelten Verbrauchsdaten und die Zählerkennzeichnung in einer Liste, welche vorzugsweise als Datenbank ausgeführt ist, gespeichert sind.

Jeder Messstelle ist wenigstens ein elektronisch auswertbares ldentifizierungsmerkmal zur eindeutigen Kennzeichnung der Messstelle logisch und physisch zugeordnet.

Erfindungsgemäß ist die Messstelle mit einer Sendereinheit zur Übertragung des elektronisch auswertbaren Identifizierungsmerkmales zu einer mit dem Verbrauchszähler oder der Abfrageeinheit verbundenen Empfängereinheit versehen. Die Empfängereinheit ist als austauschbare und/oder nachrüstbare Komponente im Verbrauchszähler oder der Abfrageeinheit integriert.

Der Verbrauchszähler oder die Abfrageeinheit sind dafür vorgesehen, dass an die Empfängereinheit übertragene elektronisch auswertbare Identifizierungsmerkmal der Messstelle zur weiteren Verarbeitung der Erfassungs- und Auswerteeinheit bereitzustellen.

In einer bevorzugten Ausführungsform kann das an die Empfängereinheit übertragene elektronisch auswertbare Identifizierungsmerkmal der Messstelle vor der Übertragung zur Erfassungs- und Auswerteeinheit auch zuerst vom Verbrauchszähler oder der Abfrageeinheit gespeichert werden.

Somit ist in vorteilhafter Weise mittels der Erfassungs- und Auswerteeinheit eine Zuordnung der Messstelle, der Zählerkennzeichnung des Zählers und der vom Zähler erfassten Verbrauchsdaten zu einem Kundennamen ohne zusätzliche manuelle Eingaben ausführbar.

In einer vorteilhaften Ausgestaltung der erfindungsgemäßen Einrichtung ist vorgesehen, dass das Identifizierungsmerkmal der Messstelle mittels einer als RFID (Radiofrequenz Identifikation) ausgeführten Sender- und Empfängereinheit übertragen wird, wobei die Übertragung das Identifikationsmerkmales als Identifizierungsdaten berührungslos über eine magnetische oder elektromagnetische Übertragung erfolgt.

Die Vorteile der Verwendung von sogenannten RFID-Tags oder RFID-Transpondern als Sendereinheit beruhen darauf, dass zwischen der Sendereinheit und der Empfängereinheit kein Sichtkontakt bestehen muss. Auch bieten die RFID-Tags die Möglichkeit, die auf ihnen gespeicherten Identifikationsdaten zu einem späteren Zeitpunkt in einfacher Weise zu ändern.

RFID-Tags sind als aktive oder passive Transponder ausführbar, wobei die Energieversorgung der aktiven RFID-Tags mittels einer eigenen Energiequelle erfolgt, wohingegen passive RFID-Tags keine eigene Energiequelle aufweisen und die Energieübermittlung durch eine induktive Kopplung mit der Empfängereinheit erfolgt.

In einer weiteren Ausführungsform der Erfindung ist vorgesehen, das ldentifizierungsmerkmal der Messstelle als kostengünstigen und standardisierten ein-, zwei- oder zweidimensionalen Strichcode, auch Barcode genannt, auszuführen, wobei der Barcode die Sendereinheit bildet. Das dem Barcode zugeordnete Identifizierungsmerkmal der Messstelle wird mittels einer optischen Abtastung von der als Barcodeausleseeinheit ausgeführten Empfängereinheit, die vorzugsweise im Fernauslesemodul des Verbrauchszählers integriert ist, ausgelesen. Eindimensionale Barcodes sind beispielsweise der EAN-Code oder der Code 39. Zweidimensionale Barcodes bestehen beispielsweise aus gestapelten eindimensionalen Codes, können in Zeilen angeordnet sein oder als Flächencode in Matrixform aufgebaut sein.

Durch die Identifikation der Messstelle mittels ihres elektronisch auswertbaren Identifizierungsmerkmales und der erfindungsgemäß vorgesehenen Übertragung des Identifizierungsmerkmales wird eine eindeutige Zuordnung der Messstelle zu den erfassten Verbrauchsdaten des Verbrauchszählers gewährleistet, die zur verbesserten und fehlerreduzierte Auslesung und Auswertung der von einer Messstelle erfassten Verbrauchsdaten führt.

Ein weiterer Vorteil der erfindungsgemäßen Einrichtung ist darin zu sehen, dass eine manuelle Eingabe oder Pflege der Messstelle in der Datenbank der Erfassungs- und Auswerteeinheit entfällt und die dadurch bedingten Fehler vollständig eliminiert werden.

Das Verfahren mit dem die Aufgabe weiterhin gelöst wird, ist dem Anspruch 11 zu entnehmen. Dabei werden mittels wenigstens einem Verbrauchszähler die von einer Messstelle erfassten Verbrauchsdaten des Verbrauchszählers oder einer mit dem Verbrauchszähler verbindbaren Abfrageeinheit einer Erfassungs- und Auswerteeinheit übermittelt.

Erfindungsgemäß wird der Messstelle ein elektronisch auswertbares Identifizierungsmerkmal zugeordnet, welches vorzugsweise durch aufkleben oder einlaminieren mechanisch mit der Messstelle verbunden wird.

Das elektronisch auswertbare ldentifizierungsmerkmal der Messstelle wird mittels einer in der Messstelle integrierten Sendereinheit als einer mit dem Verbrauchszähler oder der Abfrageeinheit verbundenen Empfängereinheit übertragen, wobei das Identifizierungsmerkmal nach seiner Übertragung zur Empfängereinheit vom Verbrauchszähler oder von der Abfrageeinheit des Verbrauchszählers zur weiteren Verarbeitung in der dafür vorgesehenen Erfassungs- und Auswerteeinheit gespeichert wird.

Mittels einer in der Erfassungs- und Auswerteeinheit integrierten Datenbank werden das elektronisch auswertbare Identifizierungsmerkmal der Messstelle und die Zählerkennzeichnung des zugeordneten Verbrauchszählers eineindeutig und die vom Zähler erfassten Verbrauchsdaten und das Identifizierungsmerkmal der Messstelle oder die Zählerkennzeichnung eindeutig miteinander verknüpft.

In einer bevorzugten Ausführungsform ist auch eine Verknüpfung des elektronisch auswertbaren Identifizierungsmerkmals der Messstelle und der Zählerkennzeichnung des zugeordneten Verbrauchszählers sowie die vom Zähler erfassten Verbrauchsdaten und das Identifizierungsmerkmal der Messstelle oder die Zählerkennzeichnung mit Kundenstammdaten vorgesehen.

Anhand des in den folgenden Figuren dargestellten Ausführungsbeispieles sollen die Erfindung sowie vorteilhafte Ausgestaltungen, Verbesserungen und weitere Vorteile der Erfindung näher erläutert und beschrieben werden.

### Es zeigen:

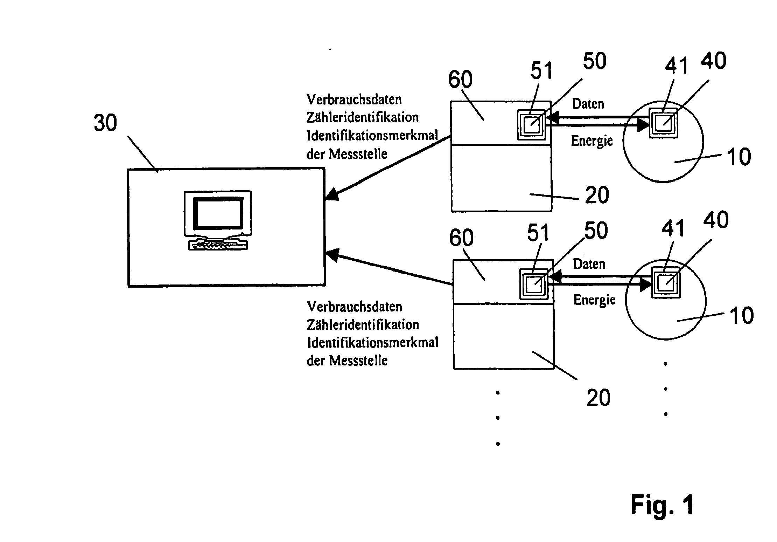

- **Fig. 1**: eine Ausführungsform einer erfindungsgemäßen Einrichtung zur elektronischen Identifikation der Messstellen von Verbrauchszählern, und
- **Fig**. 2: eine beispielhafte Darstellung des Verfahrens zur automatischen Zuordnung und Auswertung der erfassten Verbrauchsdaten zu einer Messstelle.

**Fig.** 1 zeigt eine Ausführungsform der erfindungsgemäßen Einrichtung zur elektronischen Identifikation von Messstellen 10 elektronischer Verbrauchszähler 20, wobei sich die nachfolgend beschriebene Ausführungsform der erfindungsgemäßen Einrichtung beispielhaft auf eine Messstelle 10 und einem der Messstelle 10 zugehörigen Verbrauchszähler 20 eines Versorgungsnetzes bezieht, wobei das Versorgungsnetz üblicherweise aus einer Vielzahl von Messstellen 10 und Verbrauchszählern 20 aufgebaut ist.

Erfindungsgemäß ist an den Messstellen 10 des Versorgungsnetzes ein RFID-Tag, auch Transponder genannt, mechanisch aufgebracht.

Der Transponder 40 trägt ein elektronisch auswertbares ldentifizierungsmerkmal und überträgt in seiner Funktion als Sendereinheit 40 mittels der elektromagnetischen Induktion das der Messstelle 10 eindeutig zugeordnete Identifizierungsmerkmal kontaktlos über eine dafür vorgesehene Transponderantenne 41 als Datensignal zu einem mit dem Verbrauchszähler 20 verbindbaren, als Fernauslesemodul ausgeführter Abfrageeinheit 60.

Eine im Fernauslesemodul 60 als Leseeinheit ausgeführte Empfängereinheit 50 empfängt mittels einer dafür vorgesehenen Leseantenne 51 das Datensignal mit dem elektronisch auswertbaren Identifizierungsmerkmal und stellt das Identifizierungsmerkmal einer als Personal Computer ausgeführten Erfassungs- und Auswerteeinheit 30 zur weiteren Verarbeitung bereit.

Das Fernauslesemodul 60 ist weiterhin dafür vorgesehen die vom Verbrauchszähler 20 erfassten Verbrauchsdaten und eine Zählernummer oder Zähleridentifikationsnummer, im folgenden Zählerkennzeichnung genannt, zur Identifikation des Zählers 20 dem Erfassungs- und Auswerteeinheit 30 zu übertragen.

Die zur Erfassungs- und Auswerteeinheit 30 übertragene Zählerkennzeichnung, die erfassten Verbrauchsdaten und die das Identifizierungsmerkmal der Messstelle 10 kennzeichnenden Daten werden mittels einer dafür vorgesehenen Software, beispielsweise in einer Datenbank gespeichert und sind einer Kundennummer beziehungsweise Kundenstammdaten zugeordnet, wobei die Kundenstammdaten beispielsweise der Name und die Adresse eines Kunden sind.

Vorteilhafterweise ist der an der Messstelle 10 befestigte Transponder 40 als passive Sendereinheit 40, also als Sendereinheit Sender ohne eigene Energieversorgung, ausgeführt. Der passive Transponder 40 benötigt keine eigene Energiequelle. Die erforderliche Energie zur Übertragung des Datensignals mit dem Identifizierungsmerkmal wird mittels einer induktiven Kopplung mit der Leseantenne 51 der Empfängereinheit 50 des Fernauslesemoduls 60 ausgeführt.

Befindet sich der Transponder 40 mit dem gespeicherten Identifizierungsmerkmal der Messstelle 10 im Wirkungsbereich des Fernauslesemoduls 60, empfängt er zunächst ein Energiefeld, das einen Energiespeicher des Transponders auflädt. Ist der Energiespeicher mit Energie aufgefüllt, sendet eine im Transponder 40 integrierte Sendelektronik den Inhalt des Datenspeichers, also das Identifizierungsmerkmal der Messstelle 10, über die Transponderantenne 41 an die Leseantenne 51 der Empfängereinheit 50 des Fernauslesemoduls 60.

Durch die Verwendung des aus RFID-Tag 40 und Erfassungseinheit 50 bestehenden RFID-Systems zur Übertragung des Identifizierungsmerkmales der Messstelle 10 ist jederzeit eine Änderung oder Ergänzung des Identifizierungsmerkmales möglich.

Darüber hinaus ist bei der Übertragung des Identifizierungsmerkmales innerhalb des RFID-Systems kein direkter Sichtkontakt erforderlich.

Auch Umwelteinflüsse, wie Feuchtigkeit oder ungünstige Lichtverhältnisse beeinflussen die Leistungsfähigkeit des Transponders 40 nicht und sind somit ohne Einfluss auf die vollständige und richtige Übertragung des Identifizierungsmerkmales der Messstelle10.

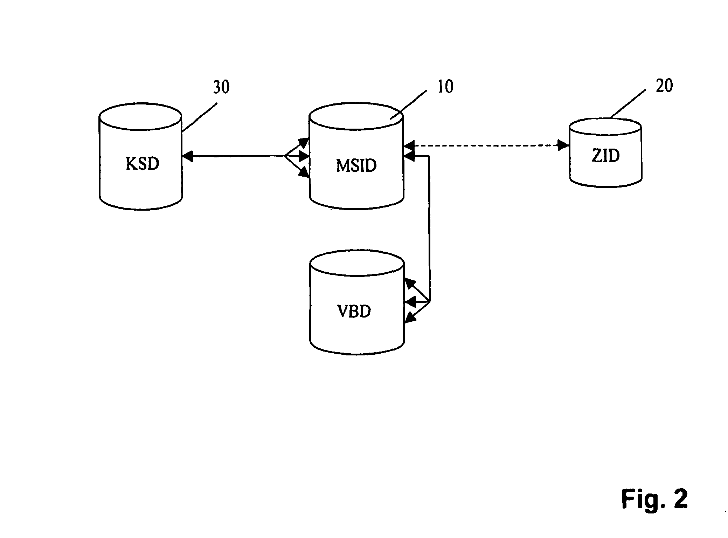

Fig. 2 zeigt eine beispielhafte Zuordnung und Verknüpfung des Identifizierungsmerkmals der Messstelle 10 und einem in einer Datenbank der Erfassungs- und Auswerteeinheit gespeicherten Kundenstamm.

Der Messstelle 10 wird ein elektronisch auswertbares Identifizierungsmerkmal MSID zur eindeutigen Kennzeichnung der Messstelle logisch und physisch zugeordnet.

Das mittels dem RFID-System zum Verbrauchszählers 20 übertragene Identifikationsmerkmal MSID der Messstelle 10 wird zusätzlich zu den vom Verbrauchszähler 20 erfassten Verbrauchsdaten und der Zähleridentifikationskennzeichnung ZID mittels dem Fernauslesemodul 60 zur Erfassungs- und Auswerteeinheit 30 übertragen.

In einer Zuordnungsliste der Datenbank der Erfassungs- und Auswerteeinheit 30 wird das übertragene elektronisch auswertbare Identifikationsmerkmal MSID der Messstelle 10 eineindeutig mit der Zähleridentifikationskennzeichnung ZID des zugeordneten Verbrauchszählers 20, den erfassten Verbrauchsdaten VD und den Kundenstammdaten KSD verknüpft. Die Kundenstammdaten KSD umfassen beispielsweise den Namen und die Adresse der entsprechenden Kunden und sind ebenfalls in der Erfassungs- und Auswerteeinheit 30 abgelegt.

Mit der erfindungsgemäßen Einrichtung und dem erfindungsgemäßen Verfahren vereinfacht sich in vorteilhafter Weise die Verarbeitung der Verbrauchsdaten, da durch das elektronische Auslesen der Messstellenidentifikation eine zuverlässige, automatische und eindeutige Verknüpfung der Messstelle 10, der Verbrauchsdaten und der Zähleridentifikation bereitgestellt wird.

### Bezugszeichenliste

- 10: Messstelle
- 20: Verbrauchszähler
- 30: Erfassungs- und Auswerteeinheit
- 40: Sendereinheit
- 41: Transponderantenne
- 50: Empfängereinheit
- 51: Leseantenne
- 60: Abfrageeinheit, Fernauslesemodul
- MSID: Identifikationsmerkmal der Messstelle
- ZID: Zähleridentifikationskennzeichnung des Verbrauchszählers
- VD: Verbrauchsdaten
- KSD: Kundenstammdaten

## Patentansprüche

1. Einrichtung zur elektronischen Identifikation der Messstellen (10) von Verbrauchszählern (20) mit wenigstens einem Verbrauchszähler (20) zur Anzeige der erfassten Verbrauchsdaten, wobei der Verbrauchszähler (20) eine Zählerkennzeichnung aufweist und der Verbrauchszähler (20) oder eine mit dem Verbrauchszähler (20) verbindbare Abfrageeinheit (60) die erfassten Verbrauchsdaten einer Erfassungs- und Auswerteeinheit (30) übermittelt, **dadurch gekennzeichnet, dass**
- der Messstelle (10) wenigstens ein elektronisch auswertbares Identifizierungsmerkmal zur eindeutigen Kennzeichnung der Messstelle (10) und zur eindeutigen Zuordnung der Messstelle (10) zu den erfassten Verbrauchsdaten des Verbrauchszählers (20) zugeordnet ist,
- das Identifizierungsmerkmal mechanisch mit der Messstelle (10) verbunden ist,
- die Messstelle (10) mit einer Sendereinheit (40) zur Übertragung des elektronisch auswertbaren Identifizierungsmerkmales zu einer mit dem Verbrauchszähler (20) oder der Abfrageeinheit (60) verbundenen Empfängereinheit (50) versehen ist,
- der Verbrauchszähler (20) oder die Abfrageeinheit (60) dafür vorgesehen sind, das zur Empfängereinheit (50) übertragene elektronisch auswertbare Identifizierungsmerkmal der Messstelle (10) zur weiteren Verarbeitung der Erfassungs- und Auswerteeinheit (30) bereitzustellen, und
- mittels einer in der Erfassungs- und Auswerteeinheit (30) integrierten Datenbank das elektronisch auswertbare Identifizierungsmerkmal der Messstelle (10) und die Zählerkennzeichnung des zugeordneten Verbrauchszählers (20) eineindeutig und die vom Zähler (20) erfassten Verbrauchsdaten und das Identifizierungsmerkmal der Messstelle (10) oder die Zählerkennzeichnung eindeutig miteinander verknüpfbar sind.

2. Einrichtung nach Anspruch 1, **dadurch gekennzeichnet, dass** in der Erfassungsund Auswerteeinheit (30) eine Datenbank zur Zuordnung der Messstelle (10) und der vom Zähler (20) erfassten Verbrauchsdaten zu einem Kundennamen vorgesehen ist.

3. Einrichtung nach Anspruch 1 oder 2, **dadurch gekennzeichnet, dass** durch den Verbrauchszähler (20) oder die Abfragevorrichtung (60) das zur Empfängereinheit (50) übertragene elektronisch auswertbare Identifizierungsmerkmal der Messstelle (10) speicherbar ist.

4. Einrichtung nach einem der Ansprüche 1 bis 3, **dadurch gekennzeichnet, dass** die Sendeeinheit (40) der Messstelle (10) als passiver Sender ausgeführt ist.

5. Einrichtung nach Anspruch 4, **dadurch gekennzeichnet, dass** die Sendeeinheit (40) der Messstelle (10) als RFID-Tag ausgeführt ist.

6. Einrichtung nach Anspruch 1 bis 4, **dadurch gekennzeichnet, dass** das Identifizierungsmerkmal der Messstelle (10) als ein-, zwei oder dreidimensionater Barcode ausgeführt ist.

7. Einrichtung nach einem der vorherigen Ansprüche, **dadurch gekennzeichnet, dass** die Empfängereinheit (50) eine austauschbare und/oder nachrüstbare Komponente des Verbrauchszählers (20) oder der Abfrageeinheit (60) ist.

8. Einrichtung nach einen der vorherigen Ansprüche, **dadurch gekennzeichnet, dass** das Identifizierungsmerkmal mit der Messstelle (10) mechanisch verbindbar ist.

9. Einrichtung nach einem der vorherigen Ansprüche, **dadurch gekennzeichnet, dass** die Abfrageeinheit (60) ein Fernauslesemodul ist.

10. Einrichtung nach einen der vorherigen Ansprüche, **dadurch gekennzeichnet, dass** die Verbrauchszähler (20) elektrische oder mechanische Wasser-, Gas-, Wärme- oder Elektrizitätszähler sind.

11. Verfahren zur elektronischen Identifikation der Messstellen (10) von Verbrauchszählern (20) mit wenigstens einen Verbrauchszähler (20) zur Anzeige der erfassten Verbrauchsdaten, wobei der Verbrauchszähler (20) eine Zählerkennung aufweist und die erfassten Verbrauchsdaten des Verbrauchszählers (20) oder einer mit dem Verbrauchszähler (20) verbindbaren Abfrageeinheit (60) einer Erfassungs- und Auswerteeinheit (30) übermittelt werden, **dadurch gekennzeichnet, dass**
- der Messstelle (10) wenigstens ein elektronisch auswertbares Identifizierungsmerkmal zur eindeutigen Kennzeichnung der Messstelle (10) und zur eindeutigen Zuordnung der Messstelle (10) zu den erfassten Verbrauchsdaten des Verbrauchszählers (20) zugeordnet wird,
- das Identifizierungsmerkmal mechanisch mit der Messstelle (10) verbunden wird,
- das elektronisch auswertbare Identifizierungsmerkmal der Messstelle (10) mittels einer Sendereinheit (40) zu einer mit dem Verbrauchszähler (20) oder der Abfrageeinheit (60) verbundenen Empfängereinheit (50) übertragen wird,
- das zur Empfängereinheit (50) übertragene elektronisch auswertbare Identifizierungsmerkmal der Messstelle (10) vom Verbrauchszähler (20) oder der mit dem Verbrauchszähler (20) verbindbaren Abfrageeinheit (60) zur weiteren Verarbeitung der Erfassungs- und Auswerteeinheit (30) bereitgestellt wird, und
- mittels einer in der Erfassungs- und Auswerteeinheit (30) integrierten Datenbank das elektronisch auswertbare Identifizierungsmerkmal der Messstelle (10) und die Zählerkennzeichnung des zugeordneten Verbrauchszählers (20) eineindeutig und die vom Zähler (20) erfassten Verbrauchsdaten und das Identifizierungsmerkmal der Messstelle (10) oder die Zählerkennzeichnung eindeutig miteinander verknüpft werden.

12. Verfahren nach Anspruch 11, **dadurch gekennzeichnet, dass** mittels einer in der in der Erfassungs- und Auswerteeinheit (30) integrierten Datenbank das elektronisch auswertbare Identifizierungsmerkmal der Messstelle (10) und der vom Zähler (20) erfassten Verbrauchsdaten eineindeutig verknüpft werden.

13. Verfahren nach Anspruch 12, **dadurch gekennzeichnet, dass** mittels einer in der in der Erfassungs- und Auswerteeinheit (30) integrierten Datenbank das elektronisch auswertbare Identifizierungsmerkmal der Messstelle (10) und die vom Zähler (20) erfassten Verbrauchsdaten mit vorhandenen Kundenstammdaten verknüpft werden.

14. Verfahren nach einem der Ansprüche 11 bis 13, **dadurch gekennzeichnet, dass** das elektronisch auswertbare Identifizierungsmerkmal der Messstelle (10) mittels einer als passiver Sender, beispielsweise als RFID-Tag, ausgeführten Sendereinheit (40) zur Empfängereinheit (50) übertragen wird.

15. Verfahren nach einem der Ansprüche 11 bis 13, **dadurch gekennzeichnet, dass** das elektronisch auswertbare Identifizierungsmerkmal der Messstelle (10) als ein-, zwei- oder drei dimensionaler Barcode ausgeführt wird.

16. Verfahren nach Anspruch 11 bis 15, **dadurch gekennzeichnet, dass** die Empfängereinheit (50) als austauschbare oder nachrüstbare Komponente des Verbrauchszählers (20) oder der Abfrageeinheit (60) ausgeführt wird.

17. Verfahren nach einen der Ansprüche 11 bis 16, **dadurch gekennzeichnet, dass** das identifizierungsmerkmal mit der Messstelle (10) mechanisch verbunden wird.

18. Verfahren nach einem der Ansprüche 11 bis 17, **dadurch gekennzeichnet, dass** die Abfrageeinheit (60) als Fernauslesemodul ausgeführt wird.

## Claims

1. Device for electronically identifying the measuring points (10) of consumption meters (20) with at least one consumption meter (20) for displaying the acquired consumption data, the consumption meter (20) having a meter identification and the consumption meter (20) or a query unit (60) which can be connected to the consumption meter (20) transmitting the acquired consumption data to an acquisition and evaluation unit (30), **characterized in that**
- at least one electronically evaluable identification feature for uniquely identifying the measuring point (10) and for uniquely assigning the measuring point (10) to the acquired consumption data from the consumption meter (20) is assigned to the measuring point (10),
- the identification feature is mechanically connected to the measuring point (10),
- the measuring point (10) is provided with a transmitter unit (40) for transmitting the electronically evaluable identification feature to a receiver unit (50) connected to the consumption meter (20) or to the query unit (60),
- the consumption meter (20) or the query unit (60) is provided for the purpose of providing the acquisition and evaluation unit (30) with the electronically evaluable identification feature of the measuring point (10), which has been transmitted to the receiver unit (50), for further processing, and
- a database integrated in the acquisition and evaluation unit (30) can be used to link the electronically evaluable identification feature of the measuring point (10) and the meter identification of the associated consumption meter (20) to one another on a one-to-one basis and to uniquely link the consumption data acquired by the meter (20) and the identification feature of the measuring point (10) or the meter identification to one another.

2. Device according to Claim 1, **characterized in that** a database for assigning the measuring point (10) and the consumption data acquired by the meter (20) to a customer name is provided in the acquisition and evaluation unit (30).

3. Device according to Claim 1 or 2, **characterized in that** the consumption meter (20) or the query apparatus (60) can store the electronically evaluable identification feature of the measuring point (10) which has been transmitted to the receiver unit (50).

4. Device according to one of Claims 1 to 3, **characterized in that** the transmitting unit (40) of the measuring point (10) is in the form of a passive transmitter.

5. Device according to Claim 4, **characterized in that** the transmitting unit (40) of the measuring point (10) is in the form of an RFID tag.

6. Device according to Claims 1 to 4, **characterized in that** the identification feature of the measuring point (10) is in the form of a one-dimensional, two-dimensional or three-dimensional barcode.

7. Device according to one of the preceding claims, **characterized in that** the receiver unit (50) is a replaceable and/or retrofittable component of the consumption meter (20) or of the query unit (60).

8. Device according to one of the preceding claims, **characterized in that** the identification feature can be mechanically connected to the measuring point (10).

9. Device according to one of the preceding claims, **characterized in that** the query unit (60) is a remote reading module.

10. Device according to one of the preceding claims, **characterized in that** the consumption meters (20) are electrical or mechanical water, gas, heat or electricity meters.

11. Method for electronically identifying the measuring points (10) of consumption meters (20) with at least one consumption meter (20) for displaying the acquired consumption data, the consumption meter (20) having a meter identifier and the acquired consumption data from the consumption meter (20) or from a query unit (60) which can be connected to the consumption meter (20) being transmitted to an acquisition and evaluation unit (30), **characterized in that**
- at least one electronically evaluable identification feature for uniquely identifying the measuring point (10) and for uniquely assigning the measuring point (10) to the acquired consumption data from the consumption meter (20) is assigned to the measuring point (10),
- the identification feature is mechanically connected to the measuring point (10),
- a transmitter unit (40) is used to transmit the electronically evaluable identification feature of the measuring point (10) to a receiver unit (50) connected to the consumption meter (20) or to the query unit (60),
- the consumption meter (20) or the query unit (60) which can be connected to the consumption meter (20) provides the acquisition and evaluation unit (30) with the electronically evaluable identification feature of the measuring point (10), which has been transmitted to the receiver unit (50), for further processing, and
- a database integrated in the acquisition and evaluation unit (30) is used to link the electronically evaluable identification feature of the measuring point (10) and the meter identification of the associated consumption meter (20) to one another on a one-to-one basis and to uniquely link the consumption data acquired by the meter (20) and the identification feature of the measuring point (10) or the meter identification to one another.

12. Method according to Claim 11, **characterized in that** a database integrated in the acquisition and evaluation unit (30) is used to link the electronically evaluable identification feature of the measuring point (10) and the consumption data acquired by the meter (20) on a one-to-one basis.

13. Method according to Claim 12, **characterized in that** a database integrated in the acquisition and evaluation unit (30) is used to link the electronically evaluable identification feature of the measuring point (10) and the consumption data acquired by the meter (20) to existing customer master data.

14. Method according to one of Claims 11 to 13, **characterized in that** the electronically evaluable identification feature of the measuring point (10) is transmitted to the receiver unit (50) using a transmitter unit (40) which is in the form of a passive transmitter, for example an RFID tag.

15. Method according to one of Claims 11 to 13, **characterized in that** the electronically evaluable identification feature of the measuring point (10) is in the form of a one-dimensional, two-dimensional or three-dimensional barcode.

16. Method according to Claims 11 to 15, **characterized in that** the receiver unit (50) is in the form of a replaceable or retrofittable component of the consumption meter (20) or of the query unit (60).

17. Method according to one of Claims 11 to 16, **characterized in that** the identification feature is mechanically connected to the measuring point (10).

18. Method according to one of Claims 11 to 17, **characterized in that** the query unit (60) is in the form of a remote reading module.

## Revendications

1. Dispositif d'identification électronique des points de mesure (10) de compteurs de consommation (20) comportant au moins un compteur de consommation (20) destiné à afficher les données de consommation détectées, dans lequel le compteur de consommation (20) présente un identificateur de compteur et le compteur de consommation (20) ou une unité d'interrogation (60) pouvant être reliée au compteur de consommation (20) transmet les données de consommation détectées à une unité de détection et d'évaluation (30), **caractérisé en ce que**
- au moins une caractéristique d'identification pouvant être évaluée électroniquement est affectée au point de mesure (10) pour identifier de manière unique le point de mesure (10) et pour affecter de manière unique le point de mesure (10) aux données de consommation détectées du compteur de consommation (20),
- la caractéristique d'identification est reliée mécaniquement au point de mesure (10),
- le point de mesure (10) est muni d'une unité d'émission (40) destinée à transmettre la caractéristique d'identification pouvant être évaluée électroniquement à une unité de réception (50) reliée au compteur de consommation (20) ou à l'unité d'interrogation (60),
- le compteur de consommation (20) ou l'unité d'interrogation (60) est prévu pour fournir la caractéristique d'identification pouvant être évaluée électroniquement du point de mesure (10) et transmise à l'unité de réception (50) en vue d'un traitement supplémentaire par l'unité de détection et d'évaluation (30), et
- la caractéristique d'identification pouvant être évaluée électroniquement du point de mesure (10) et l'identificateur de compteur du compteur de consommation associé (20) peuvent être combinés l'un à l'autre de manière biunivoque et les données de consommation détectées par le compteur (20) et la caractéristique d'identification du point de mesure (10) ou l'identificateur de compteur peuvent être combinés les uns aux autres de manière unique au moyen d'une banque de données intégrée à l'unité de détection et d'évaluation (30).

2. Dispositif selon la revendication 1, **caractérisé en ce qu'**une banque de données est prévue dans l'unité de détection et d'évaluation (30) pour affecter le point de mesure (10) et les données de consommation détectées par le compteur (20) à un nom de client.

3. Dispositif selon la revendication 1 ou 2, **caractérisé en ce que** la caractéristique d'identification pouvant être évaluée électroniquement du point de mesure (10) et transmise à l'unité de réception (50) peut être mémorisée au moyen du compteur de consommation (20) ou du dispositif d'interrogation (60).

4. Dispositif selon l'une quelconque des revendications 1 à 3, **caractérisé en ce que** l'unité d'émission (40) du point de mesure (10) est réalisée sous la forme d'un émetteur passif.

5. Dispositif selon la revendication 4, **caractérisé en ce que** l'unité d'émission (40) du point de mesure (10) est réalisée sous la forme d'une étiquette RFID.

6. Dispositif selon les revendications 1 à 4, **caractérisé en ce que** la caractéristique d'identification du point de mesure (10) est réalisée sous la forme d'un code à barres à une dimension ou à deux ou trois dimensions.

7. Dispositif selon l'une quelconque des revendications précédentes, **caractérisé en ce que** l'unité de réception (50) est un composant remplaçable et/ou pouvant être mis à niveau du compteur de consommation (20) ou de l'unité d'interrogation (60).

8. Dispositif selon l'une quelconque des revendications précédentes, **caractérisé en ce que** la caractéristique d'identification peut être reliée mécaniquement au point de mesure (10).

9. Dispositif selon l'une quelconque des revendications précédentes, **caractérisé en ce que** l'unité d'interrogation (60) est un module de lecture à distance.

10. Dispositif selon l'une quelconque des revendications précédentes, **caractérisé en ce que** les compteurs de consommation (20) sont des compteurs électriques ou mécaniques d'eau, de gaz, de chaleur ou d'électricité.

11. Procédé d'identification électronique des points de mesure (10) de compteurs de consommation (20) comportant au moins un compteur de consommation (20) destiné à afficher les données de consommation détectées, dans lequel le compteur de consommation (20) présente un identificateur de compteur et les données de consommation détectées par le compteur de consommation (20) ou une unité d'interrogation (60) pouvant être reliée au compteur de consommation (20) sont transmises à une unité de détection et d'évaluation (30), **caractérisé en ce que**
- au moins une caractéristique d'identification pouvant être évaluée électroniquement est affectée au point de mesure (10) pour identifier de manière unique le point de mesure (10) et pour affecter de manière unique le point de mesure (10) aux données de consommation détectées du compteur de consommation (20),
- la caractéristique d'identification est reliée mécaniquement au point de mesure (10),
- la caractéristique d'identification pouvant être évaluée électroniquement du point de mesure (10) est transmise au moyen d'une unité d'émission (40) à une unité de réception (50) reliée au compteur de consommation (20) ou à l'unité d'interrogation (60),
- la caractéristique d'identification pouvant être évaluée électroniquement du point de mesure (10) et transmise à l'unité de réception (50) est fournie par le compteur de consommation (20) ou l'unité d'interrogation (60) pouvant être reliée au compteur de consommation (20) en vue d'un traitement supplémentaire par l'unité de détection et d'évaluation (30), et
- la caractéristique d'identification pouvant être évaluée électroniquement du point de mesure (10) et l'identificateur de compteur du compteur de consommation associé (20) sont combinés l'un à l'autre de manière biunivoque et les données de consommation détectées par le compteur (20) et la caractéristique d'identification du point de mesure (10) ou l'identificateur de compteur sont combinés les uns aux autres de manière unique au moyen d'une banque de données intégrée à l'unité de détection et d'évaluation (30).

12. Procédé selon la revendication 11, **caractérisé en ce que** la caractéristique d'identification pouvant être évaluée électroniquement du point de mesure (10) et les données de consommation détectées par le compteur (20) sont combinées de manière biunivoque au moyen d'une banque de données intégrée à l'unité de détection et d'évaluation (30).

13. Procédé selon la revendication 12, **caractérisé en ce que** la caractéristique d'identification pouvant être évaluée électroniquement du point de mesure (10) et les données de consommation détectées par le compteur (20) sont préalablement combinées à des données de noms de clients au moyen d'une banque de données intégrée à l'unité de détection et d'évaluation (30).

14. Procédé selon l'une quelconque des revendications 11 à 13, **caractérisé en ce que** la caractéristique d'identification pouvant être évaluée électroniquement du point de mesure (10) est transmise à l'unité de réception (50) au moyen d'une unité d'émission (40) réalisée sous la forme d'un émetteur passif, par exemple d'une étiquette RFID.

15. Procédé selon l'une quelconque des revendications 11 à 13, **caractérisé en ce que** la caractéristique d'identification pouvant être évaluée électroniquement du point de mesure (10) est réalisée sous la forme d'un code à barres à une dimension, ou à deux ou trois dimensions.

16. Procédé selon les revendications 11 à 15, **caractérisé en ce que** l'unité de réception (50) est réalisée sous la forme d'un composant remplaçable ou pouvant être mis à niveau du compteur de consommation (20) ou de l'unité d'interrogation (60).

17. Procédé selon l'une quelconque des revendications 11 à 16, **caractérisé en ce que** la caractéristique d'identification est reliée mécaniquement au point de mesure (10).

18. Procédé selon l'une quelconque des revendications 11 à 17, **caractérisé en ce que** l'unité d'interrogation (60) est réalisée sous la forme d'un module de lecture à distance.
